# EUROPÄISCHE PATENTSCHRIFT

(11) **EP 3 414 038 B1**
(45) Veröffentlichungstag und Bekanntmachung des Hinweises auf die Patenterteilung: **16.11.2022**
(21) Anmeldenummer: 17707191.7
(22) Anmeldetag: 10.02.2017
(51) Int. Cl.: B23B 51/02

(54) **BOHRWERKZEUG**
DRILLING TOOL
OUTIL DE PERÇAGE

(30) Priorität: 11.02.2016 DE 102016202104
(43) Veröffentlichungstag der Anmeldung: 19.12.2018
(73) Patentinhaber: MAPAL Fabrik für Präzisionswerkzeuge Dr. Kress KG, 73431 Aalen (DE)
(72) Erfinder: KRENZER, Ulrich, 87787 Wolfertschwenden (DE)
(74) Vertreter: Kordel, Mattias
(86) Internationale Anmeldenummer: PCT/EP2017/052986
(87) Internationale Veröffentlichungsnummer: WO 2017/137551

(56) Entgegenhaltungen:
- WO-A1-95/29783
- DE-A1- 3 037 097
- DE-A1-102008 045 326

## Beschreibung

Die Erfindung betrifft ein Bohrwerkzeug. Bohrwerkzeuge der hier angesprochenen Art sind bekannt. Grundsätzlich haben derartige Bohrwerkzeuge üblicherweise eine Spitze, das heißt eine Stirnseite mit mindestens einer Hauptschneide, die mehrere Teilabschnitte aufweist. Dabei ist ein Teilabschnitt der mindestens zwei Hauptschneiden näher an der Mittelachse angeordnet, als ein zweiter Teilabschnitt, welcher sich an das der Mittelachse abgewandte Ende des ersten Teilabschnitts anschließt und dessen äußerstes Ende eine Schneidkante aufweist, welche in die Umfangsfläche des Bohrwerkzeugs übergeht. Der erste Teilabschnitt der mindestens zwei Hauptschneiden trifft sich in der Regel nicht in dem Bereich der Mittelachse. Vielmehr ist ganz zentral eine Querschneide vorgesehen, welche sich im Zentrum des Bohrwerkzeugs, also auf dessen Drehachse beziehungsweise Mittelachse befindet und die Hauptschneiden verbindet. Die zentrale Spitze sorgt beim Anbohren auf ebenen und rechtwinklig zur Mittelachse des Bohrwerkzeugs verlaufenden Oberflächen des Werkstücks für eine gute Eigenzentrierung des Bohrwerkzeugs. Falls jedoch die Fläche nicht eben und/oder nicht rechtwinklig zur Mittelachse angeordnet ist, wird das Bohrwerkzeug aus der Mittelachse seitlich abgelenkt und kann dabei auch brechen. Wenn bei einem derartigen Bohrwerkzeug die Spitze nicht exakt mit der Mittelachse zusammenfällt, können die genannten Probleme noch größer werden. Werden derartige Bohrwerkzeuge auf Maschinen mit rotierender Werkzeugspindel, beispielsweise auf Bearbeitungszentren, verwendet, lassen sich Rundlauffehler durch hochwertige Spannfutter, zum Beispiel Hydrodehnspannfutter, begrenzen, sodass auch Bohrer der hier angesprochenen Art eine hohe Leistungsfähigkeit und konstante Bearbeitungsergebnisse zeigen. Bei Einsatz derartiger Bohrwerkzeuge auf Drehmaschinen, also bei einem rotierenden Werkstück und nichtrotierendem Werkzeug, tritt aber häufig ein großer Versatz der Spitze gegenüber der Mittelachse von ≥ 200 µm auf. In diesem Fall erfährt die Spitze des Bohrwerkzeugs beim Anbohren eines Werkstücks eine sehr hohe Querkraft und wird radial nach außen gedrückt, sodass die Bruchgefahr erhöht ist.

Bei einem anderen bekannten Werkzeug ist vorgesehen, zur Vermeidung der hier angesprochenen Nachteile ein Bohrwerkzeug mit mindestens zwei dezentralen Spitzen zu realisieren (DE 84 12 786 U1). Dies führt dazu, dass sich das Bohrwerkzeug leichter zentriert und die genannten Nachteile vermindert werden. DE 30 37 097 A1 offenbart ein Bohrwerkzeug nach dem Oberbegriff des Anspruchs 1.

Demgegenüber ist es Aufgabe der Erfindung, ein Bohrwerkzeug zu schaffen, welches eine weitere Verbesserung gegenüber bekannten Bohrwerkzeugen zeigt.

Zur Lösung dieser Aufgabe wird ein Bohrwerkzeug vorgeschlagen, welches die Merkmale des Anspruchs 1 umfasst. Es weist einen Grundkörper mit einer Mittelachse, einem Durchmesser und einer Stirnseite auf, an der mindestens zwei Hauptschneiden vorgesehen sind, die mehrere Teilabschnitte aufweisen. Dabei ist ein erster Teilabschnitt der mindestens zwei Hauptschneiden näher an der Mittelachse angeordnet als ein zweiter Teilabschnitt, der sich an das der Mittelachse abgewandte Ende des ersten Teilabschnitts anschließt. Die beiden Teilabschnitte der mindestens zwei Hauptschneiden weisen einen Spitzenwinkel auf, wobei der erste Teilabschnitt einen Spitzenwinkel Si ≥ 180° und der zweite Teilabschnitt einen Spitzenwinkel Sa ≤ 180° aufweist. Dabei ist vorgesehen, dass die Spitzenwinkel der beiden Teilabschnitte nicht gleichzeitig einen Spitzenwinkel von 180° einschließen. Auf diese Weise ergibt sich in dem Übergangsbereich zwischen dem ersten Teilabschnitt und dem zweiten Teilabschnitt eine Schneidspitze, in einem Abstand zur Mittelachse. Bei mindestens zwei Hauptschneiden ergeben sich also zwei derartiger Schneidspitzen. Die Schneiden der mindestens zwei Hauptschneiden weisen im ersten Teilabschnitt eine Untermittestellung auf. Das Bohrwerkzeug nach Anspruch 1 zeichnet sich dadurch aus, dass die Schneiden der mindestens zwei Hauptschneiden im zweiten Teilabschnitt eine Vormittestellung aufweisen, wodurch sich eine sehr gute Zentrierung des Bohrwerkzeugs ergibt und die oben erläuterten Nachteile vermieden werden. Zusätzlich ergibt sich der Vorteil, dass sehr hohe Vorschubwerte erreichbar sind.

Weitere Ausgestaltungen des Bohrwerkzeugs ergeben sich aus den Unteransprüchen.

Die Erfindung wird im Folgenden anhand der Zeichnung näher erläutert. Es zeigen:
- Figur 1: eine Seitenansicht eines ersten Ausführungsbeispiels eines Bohrwerkzeugs;
- Figur 2: eine vergrößerte Seitenansicht der Vorderseite des Bohrwerkzeugs nach Figur 1;
- Figur 3: eine perspektivische Vorderansicht des Bohrwerkzeugs nach Figur 1 und 2;
- Figur 4: eine Stirnseitenansicht des ersten Ausführungsbeispiels des Bohrwerkzeugs;
- Figur 5: eine Stirnansicht eines abgewandelten Ausführungsbeispiels des in den vorangegangenen Figuren dargestellten Bohrwerkzeugs, und
- Figur 6: eine Seitenansicht eines zweiten Ausführungsbeispiels eines Bohrwerkzeugs.

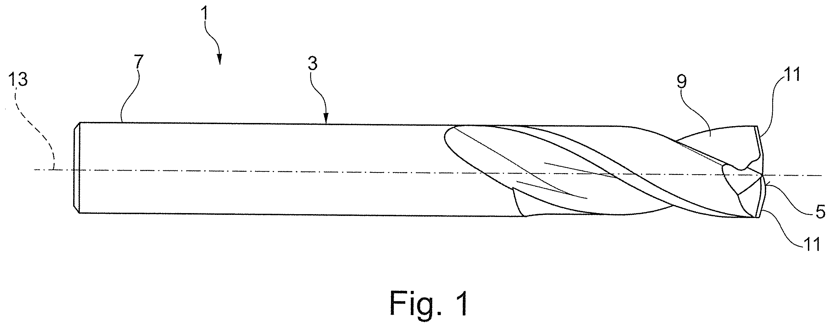

Figur 1 zeigt in Seitenansicht ein erstes Ausführungsbeispiel eines Bohrwerkzeugs 1 mit einem Grundkörper 3, der auf der in Figur 1 rechten Seite eine Stirnseite 5 und auf seiner gegenüberliegenden Seite einen Schaft 7 aufweist, der von einer Werkzeugmaschine, einem Adapter, einem Zwischenstück oder dergleichen aufnehmbar ist. Denkbar ist es beispielsweise, eine als Drehmaschine ausgebildete Werkzeugmaschine mit einer Maschinenspindel vorzusehen, die den Schaft 7 des Bohrwerkzeugs 1 erfasst. Dieser ist hier beispielhaft mit einer zylindrischen Außenfläche versehen. Es ist jedoch auch möglich, den Schaft mit einer beliebigen, üblichen Außenkontur zur Aufnahme in einer Werkzeugmaschine oder dergleichen auszubilden.

Der übrige Teil des Grundkörpers 3 ist im Wesentlichen zylindrisch ausgebildet. In dessen sich an die Stirnseite 5 anschließenden Bereich ist mindestens eine Spannut 9 eingebracht. Das hier dargestellte Bohrwerkzeug ist als sogenannter Zweischneider ausgebildet. Es weist also zwei Hauptschneiden auf, die in die Stirnseite 5 eingebracht sind. Von diesen abgetragene Späne werden von einer zugehörigen Spannut, von der hier die Spannut 9 sichtbar ist, abgeführt. Hier ist vorgesehen, dass jeder der Hauptschneiden eine eigene Spannut zugeordnet ist. Die Spannut ist beispielhaft wendelförmig ausgebildet, sie kann auch geradlinig verlaufen.

Das hier dargestellte Ausführungsbeispiel des Bohrwerkzeugs 1 weist zwei in die Stirnseite 5 eingebrachte Hauptschneiden 11 auf, die bei Bearbeitung eines Werkstücks Späne abtragen. Dabei kann das Bohrwerkzeug 1 um seine Mittelachse 13 in Rotation versetzt werden. Wird das Bohrwerkzeug 1 in eine Drehmaschine eingesetzt, so wirkt das festsehende Bohrwerkzeug mit einem in Rotation versetzten Werkstück zusammen, um eine Bohrung in dieses einzubringen. Dabei findet ein axialer Relativversatz zwischen dem Bohrwerkzeug 1 und dem hier nicht dargestellten Werkstück derart statt, dass das Bohrwerkzeug 1 in das Werkstück zur Herstellung einer Bohrung eindringt.

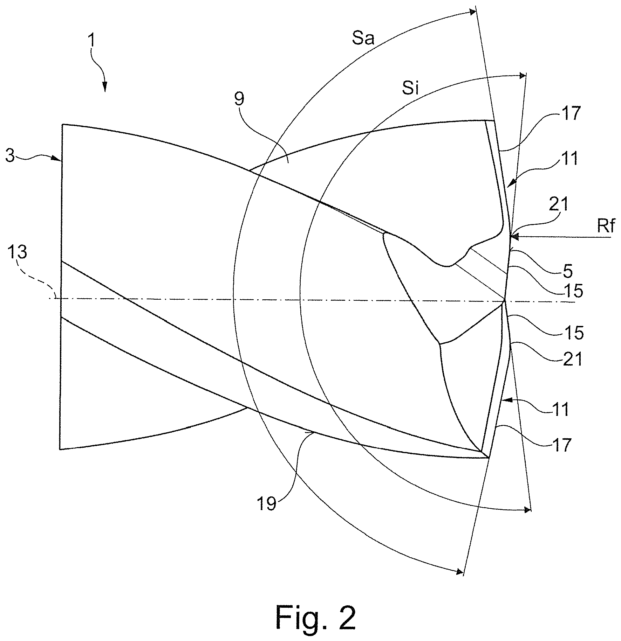

Figur 2 zeigt das erste Ausführungsbeispiel des in Figur 1 wiedergegebenen Bohrwerkzeugs 1 in Vergrößerung und zwar dessen Stirnseite 5 und einen sich daran anschließenden Bereich. Gleiche und funktionsgleiche Teile sind mit gleichen Bezugszeichen versehen. Insoweit wird auf die vorangegangene Beschreibung verwiesen.

Deutlich erkennbar ist hier wiederum, dass in den Grundkörper 3 eine Spannut 9 eingebracht ist, welche dazu dient, von der Hauptschneide 11, die hier oberhalb der Mittelachse 13 in Figur 2 wiedergegeben ist, abzuführen. Die Hauptschneide 11 unterhalb der Mittelachse 3 trägt ihrerseits von einem Werkstück bei dessen Bearbeitung Späne ab, die über eine hier nicht sichtbare Spannut abtransportiert werden.

Durch die Vergrößerung wird deutlich, dass die Hauptschneiden 11 mehrere Teilabschnitte aufweisen, von denen ein erster Teilabschnitt 15 näher zur Mittelachse 13 liegt, als ein zweiter Teilabschnitt 17, der sich an das der Mittelachse abgewandte Ende des ersten Teilabschnitts 15 anschließt und bis ganz nach außen an die Außenkontur 19 des Bohrwerkzeugs 1 reicht. Die Wiedergabe gemäß Figur 2 zeigt, dass die radial innenliegenden ersten Teilabschnitte 15 der beiden Hauptschneiden 11 miteinander einen Spitzenwinkel Si einschließen, der ≥ 180° ist. Die beiden äußeren sich an die ersten Teilabschnitte 15 anschließenden zweiten Teilabschnitte 17 schließen einen Spitzenwinkel Sa miteinander ein, der ≤ 180° ist. Durch diese Ausgestaltung der Hauptschneiden 11 im Bereich der Stirnseite 5 wird erreicht, dass im Übergang zwischen dem ersten Teilabschnitt 15 und dem zweiten Teilabschnitt 17 eine Spitze 21 ausgebildet wird, die in einem Abstand zur Mittelachse 13 angeordnet ist. Das so ausgebildete Bohrwerkzeug 1 weist also keine Zentrumsspitze auf, wie dies bei bekannten Bohrern der Fall ist, sondern zwei Spitzen 21, wobei jeder der zwei Hauptschneiden 11 jeweils eine Spitze 21 zugeordnet ist, die auch als Schneidecke bezeichnet wird. Sollte das Bohrwerkzeug mehr als zwei Hauptschneiden aufweisen, so hat es auch mehr als zwei Spitzen. Pro Hauptschneide ist eine Spitze vorgesehen.

In Figur 2 ist bei der oberhalb der Mittelachse 13 liegenden Hauptschneide 11 der Radius Rf eingezeichnet, unter dem der erste Teilabschnitt 15 in den zweiten Teilabschnitt 17 übergeht.

Die Seitenansicht gemäß Figur 2 zeigt, dass das Bohrwerkzeug 1 im zentrumsnahen Bereich, also im Bereich der Mittelachse 13 eine Hohlspitze aufweist. In einem äußeren Bereich ist die Stirnseite 5 des Bohrwerkzeugs 1 mit zwei Hauptschneiden 11 versehen, die einen konventionellen Spitzenwinkel von ≤ 180° aufweisen. Es zeigt sich, dass die beiden ersten Teilabschnitte 15 der beiden Hauptschneiden 11 die Hohlspitze des Bohrwerkzeugs 1 bilden und der konventionelle Spitzenwinkel von weniger als 180° im Bereich der äußeren zweiten Teilabschnitte 17 der Hauptschneiden 11 gegeben ist. Tritt das Bohrwerkzeug 1 mit der in Figur 2 wiedergegebenen Geometrie mit einem Werkstück in Eingriff, so gelangen zunächst die beiden Spitzen 21 der Hauptschneiden 11, die außerhalb der Mitte, also in einem Abstand zur Mittlachse 13 liegen, mit der Oberfläche eines zu bearbeitenden Werkstücks in Eingriff. Da die Spitzen 21 in einem Abstand zur Mittelachse liegen, können diese eventuelle Oberflächenunebenheiten des Werkstücks abtragen und Rundlauffehler gut kompensieren.

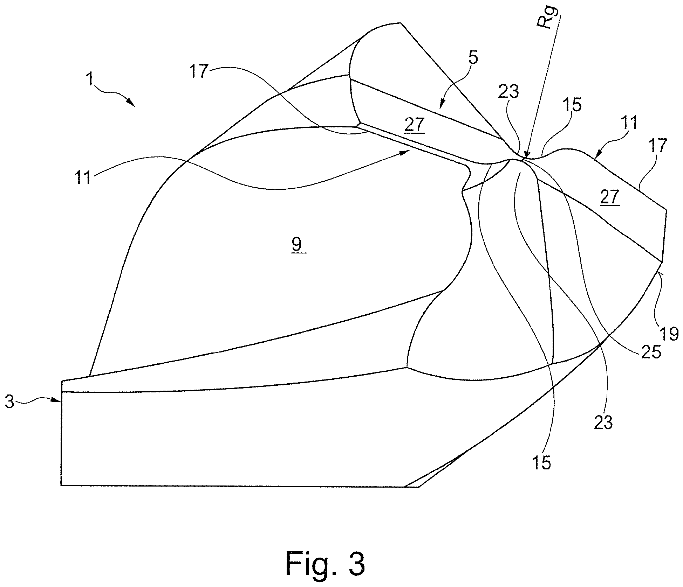

Die Stirnseite 5 und der vordere, an die Stirnseite 5 angrenzende Bereich des Grundkörpers 3 des Bohrwerkezugs 1 wird in perspektivischer Ansicht nochmal in Figur 3 wiedergegeben. Gleiche Teile sind mit gleichen Bezugsziffern versehen, sodass insofern auf die vorangegangene Beschreibung verwiesen wird.

Figur 3 zeigt die beiden Hauptschneiden 11 des Bohrwerkzeugs 1. Es ist deutlich erkennbar, dass diese einen ersten Teilabschnitt 15 aufweisen, der nahe der hier nicht wiedergegebenen Mittelachse 13 liegt, und einen zweiten sich daran anschließenden zweiten Teilabschnitt 17, der sich an das radial äußere Ende des ersten Teilabschnitts 15 anschließt und bis zur Außenkontur 19 des Bohrwerkzeugs 1 verläuft. Deutlich erkennbar ist hier, dass durch die verschiedenen Spitzenwinkel der ersten Teilabschnitte 15 und zweiten Teilabschnitte 17 bei den beiden Hauptschneiden jeweils eine Spitze 21 gebildet wird, in deren Bereich der erste Teilabschnitt 15 unter einem Radius Rf in den zweiten Teilabschnitt 17 übergeht.

Figur 3 zeigt deutlich, dass in die Stirnseite 5 eine Ausspitzung 23 eingebracht ist, die im Zentrum, also im Bereich der Mittelachse 13, einen Radius Rg aufweist. Diese dient dazu, den Übergangsbereich zwischen der in Figur 3 linken Hauptschneide 11 zur rechten Hauptschneide 11, der durch die Mittelachse des Bohrwerkzeugs 1 verläuft, sehr kurz auszubilden. Es ist hier in dem Übergangsbereich zwischen den beiden inneren ersten Teilabschnitten 15 der beiden Hauptschneiden 11 eine übliche Querschneide 25 vorgesehen.

Aus Figur 3 ist ersichtlich, dass der Radius Rg, unter dem die Ausspitzungen 23 im Bereich der Mittelachse ausgebildet ist, relativ groß ist. Dadurch wird das Bohrwerkzeug 1 stabil.

Die Hauptschneide 11 weist eine übliche Freifläche 27 auf, die durch einen Schleifvorgang am Grundkörper 3 im Bereich der Stirnseite realisiert wird. Durch Schleifen der Spannut 9 beziehungsweise der Ausspitzung 23 werden die Schneiden der Hauptschneide 11 im ersten Teilbereich 15 und zweiten Teilbereich 17 ausgebildet. Die Schneiden werden durch die Schnittlinie der Freifläche 27 mit der Spannut 9 beziehungsweise der Ausspitzung 23 realisiert. Es handelt sich hier also um geometrisch definierte Schneiden des Bohrwerkzeugs 1. Die Freiflächen 27 der Teilbereiche, die im Bereich der Spitze 21 ineinander übergehen. Im Übergangs- oder Zwischenbereich ist ein Bogen mit einem Radius Rf ausgebildet.

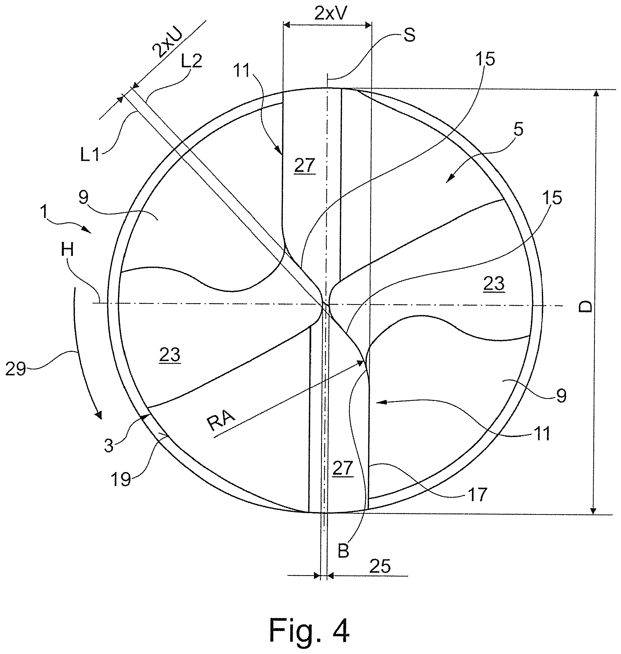

Figur 4 zeigt das in den vorangegangenen Figuren dargestellte und oben erläuterte erste Ausführungsbeispiel des Bohrwerkzeugs 1 in Stirnansicht. Gleiche und funktionsgleiche Teile sind mit identischen Bezugsziffern versehen, sodass insofern auf die vorangegangene Beschreibung verwiesen wird.

Aus der Stirnansicht gemäß Figur 4 ist ersichtlich, dass das erste Ausführungsbeispiel des Bohrwerkzeugs 1 im Bereich seiner Stirnseite 5 zwei Hauptschneiden 11 aufweist, die jeweils Teilabschnitte aufweisen, von denen ein erster Teilabschnitt 15 näher an der Mittelachse 13 liegt, welche senkrecht zur Bildebene von Figur 4 verläuft. Die Hauptschneiden 11 weisen auch einen zweiten Teilabschnitt 17 auf, der radial weiter außen liegt, also einen größeren Abstand zum Zentrum beziehungsweise der Mittelachse 13 des Bohrwerkzeugs 1 aufweist, und in einem Bereich B unter einem Bogen in den ersten Teilabschnitt 15 übergeht, wobei hier ein Krümmungsradius Ra vorgesehen ist.

In Figur 4 sind die den Hauptschneiden zugeordneten Spanräume 9 zu erkennen, außerdem die Ausspitzungen 23, die bis nahe an die Mittelachse 13 reichen, sodass die beiden Teilabschnitte 15 der beiden gegenüberliegenden Hauptschneiden 11 über eine kurze Querschneide Q ineinander übergehen.

In Figur 4 ist zum einen der Durchmesser D des Grundkörpers 3 des Bohrwerkzeugs 1 eingezeichnet. Zum anderen sind eine horizontale Hilfslinie H und eine vertikale Hilfslinie Z zu sehen. Im Schnittpunkt der dieser beiden Hilfslinien H, Z befindet sich das Zentrum des Bohrwerkzeugs 1, in dem auch die Mittelachse 13 des Bohrwerkzeugs 1 senkrecht zur Bildebene von Figur 4 verläuft.

Die Stirnansicht gemäß Figur 4 zeigt, dass die oberhalb der horizontalen Hilfslinie H liegende Hauptschneide 11 einen außenliegenden zweiten Teilabschnitt 17 aufweist, der in einem Abstand V zur vertikalen Hilfslinie S angeordnet ist. Entsprechend ist der radial außenliegende zweite Teilabschnitt 17 der unterhalb der Hilfslinie H verlaufenden Hauptschneide 11 in einem Abstand V zur vertikalen Hilfslinie S angeordnet. Dies ist durch die Maßangabe 2V in Figur 4 angedeutet, die den Vormittestand der zweiten Teilabschnitte 17 kennzeichnet.

Figur 4 zeigt außerdem, dass die beiden ersten Teilabschnitte 15 in einem Abstand von 2U zueinander angeordnet sind. Dies wird durch zwei parallele Linien L1 und L2 angedeutet, zwischen denen eine parallel zu den Linien verlaufende, hier nicht eingezeichnete Durchmesserlinie verläuft, die also den Mittelpunkt beziehungsweise die Mittelachse 13 des Bohrwerkezugs 1 schneidet. Dabei ist der Abstand des oberen ersten Teilabschnitts 15 zu der gedachten Durchmesserlinie U und der Abstand der Schneide im unteren ersten Teilabschnitt ebenfalls U. Es zeigt sich, dass die Schneiden in den ersten Teilabschnitten 15 einen Untermittestand aufweisen, also bei einer gedachten Drehung des Bohrwerkezugs 1 in Richtung des Pfeils 29 dieser gedachten Durchmesserlinie nacheilen.

Bei der Bearbeitung eines Werkstücks findet eine Relativdrehung des Bohrwerkzeugs 1 gegenüber dem Werkstück statt, bei der sich die Hauptschneiden 11 in Richtung des Pfeils 29 drehen. Wird das Bohrwerkzeug 1 in eine Drehmaschine drehfest eingesetzt, dreht sich das zu bearbeitende Werkstück, welches in Figur 4 nicht dargestellt ist, entgegengesetzt zu der Richtung, die durch den Pfeil 29 angegeben ist, gegenüber dem Bohrwerkzeug 1.

Bei einer gedachten Drehung des Bohrwerkezugs in Richtung des Pfeils 29 eilen die Schneiden im ersten Teilabschnitt 15 der Hauptschneiden 11 der gedachten Durchmesserlinie nach, weil sie einen Untermittestand aufweisen. Oben wurde erläutert, dass die Schneiden der Hauptschneiden 11 im Bereich der zweiten Teilabschnitte 17 in einem Abstand V zu der gedachten senkrechten Linie S verlaufen. Es ist hier ein Vormittestand vorgesehen, sodass also diese Schneiden der Linie S voreilen.

Auf diese Weise werden von den Hauptschneiden 11 Späne abgetragen, wobei die von den äußeren zweiten Teilabschnitten 17 abgetragenen Späne unmittelbar in die Spanräume 9 gelangen, deren die von dem innenliegenden ersten Teilabschnitten 15 abgetragenen Späne über die durch die Ausspitzung 23 gebildeten zugehörigen Spanflächen in den Spanraum 9 gelangen.

Das Ausführungsbeispiel gemäß Figur 4 ist mit einer symmetrischen Teilung das heißt einer Gleichteilung, ausgestaltet. Das heißt, die Hauptschneiden 11 sind quasi einander gegenüberliegend ausgebildet. Sie schneiden daher die Außenkontur 19 des Bohrwerkzeugs, wobei der Umfangsabstand 180° beträgt. Die Schnittpunkte der Hauptschneiden 11 und der Außenkontur liegen auf einer gedachten Durchmesserlinie, die also durch die Mittelachse 13 verläuft.

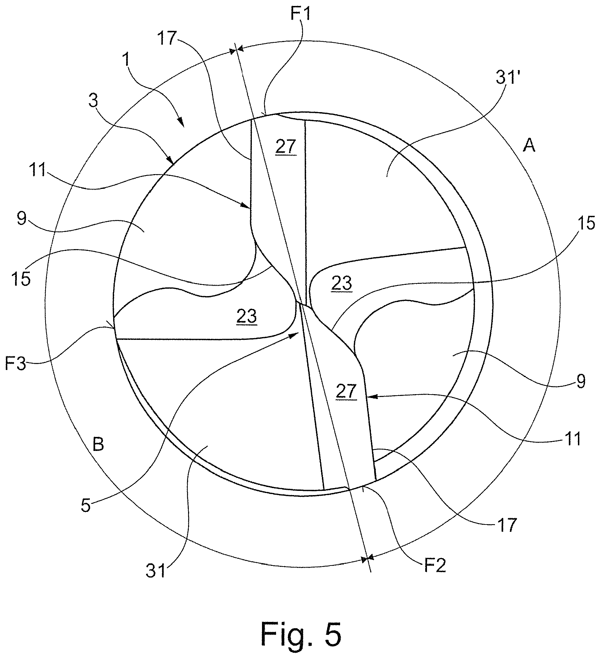

Figur 5 zeigt in Draufsicht die Stirnseite 5 eines leicht abgewandelten Bohrwerkzeugs 1. Gleiche Teile sind mit gleichen Bezugszeichen versehen. Es wird insofern auf die vorangegangene Beschreibung verwiesen.

Es ist ersichtlich, dass die Schnittpunkte der Hauptschneiden 11 mit der Außenkontur 19 des Grundkörpers 3 des Bohrwerkzeugs einander nicht gegenüberliegen, sondern verschiedene Teilungswinkel TA und TB aufweisen. Beispielhaft kann der Teilungswinkel TA in einem Bereich von 170° ° ± 5° liegen, während der Teilungswinkel TB im Bereich von 190° ° ± 5° liegt. In Figur 5 beträgt der Teilungswinkel TB vorzugsweise 190° und der Teilungswinkel TA 170°. Auf diese Weise wird erreicht, dass der zwischen den Spanräumen 9 liegende linke Stollen 31 des Bohrwerkzeugs 1 sich über einen größeren Umfangsbereich erstreckt als der in Figur 5 rechts oben liegende Stollen 31'.

Das Bohrwerkzeug 1, wie es hier beschrieben wurde, kann also zwei Hauptschneiden 11 aufweisen, die in einem gleichen Umfangsabstand zueinander angeordnet sind, wie es Figur 4 zeigt, oder die einen ungleichen Umfangsabstand gemäß Figur 5 aufweisen. Das Bohrwerkzeug 1 mit zwei Schneiden kann zwei oder drei Führungsleisten aufweisen, die der Führung des Bohrwerkzeugs 1 in der herzustellenden beziehungsweise zu bearbeitenden Bohrung führen.

Insbesondere, wenn das Bohrwerkzeug 1 mit einer Ungleichteilung gemäß Figur 5 realisiert wird, ist es möglich, auf der Außenfläche des rechts oben liegenden Stollens 31' eine Führungsleiste beziehungsweise Führungsfläche F1 und auf dem links unten liegenden Stollen 31 zwei Führungsleisten beziehungsweise Führungsflächen F2, F3 vorzusehen, um das Bohrwerkzeug 1 optimal in einer Bohrung zu führen.

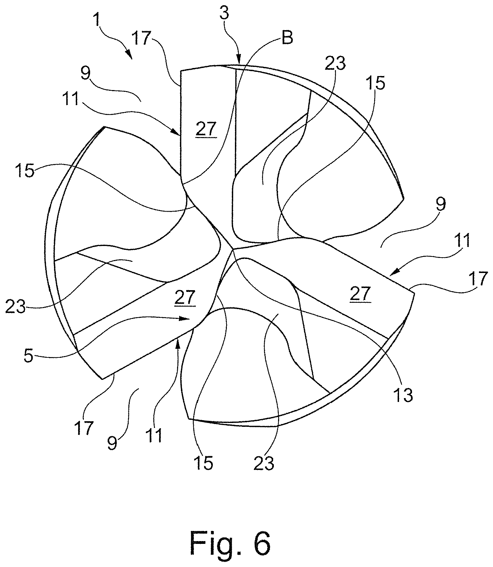

In Figur 6 ist eine Stimseitenansicht eines zweiten Ausführungsbeispiels eines Bohrwerkzeugs 1 wiedergegeben. Gleiche und funktionsgleiche Teile sind mit identischen Bezugszeichen versehen, sodass insofern auf die vorangegangene Beschreibung verwiesen wird.

Das in Figur 6 dargestellte Ausführungsbeispiel unterscheidet sich von dem in den vorangegangenen Figuren beschriebenen dadurch, dass es drei Hauptschneiden aufweist, die, in Umfangsrichtung gesehen, äquidistant angeordnet sind, hier also in einem Umfangswinkel von jeweils 120°. Mit dem Begriff Umfangsrichtung ist eine gedachte Umfangslinie eines Kreises gemeint, durch dessen Mittelpunkt die senkrecht zur Bildebene von Figur 6 verlaufenden Mittelachse 13 des Bohrwerkzeugs 1 verläuft.

Das Bohrwerkzeug 1 ist in Stirnansicht dargestellt, sodass ersichtlich wird, dass die drei Hauptschneiden 11 im Bereich der Stirnseite 5 des Bohrwerkzeugs 1 angeordnet sind. Aus der Darstellung gemäß Figur 6 ist zu erkennen, dass die Hauptschneiden 11 des hier dargestellten Ausführungsbeispiels grundsätzlich so ausgebildet sind, wie die Hauptschneiden 11 des anhand der Figuren 1 bis 5 beschriebenen Ausführungsbeispiels. Sie weisen also je zwei Teilabschnitte auf, von denen ein erster Teilabschnitt 15 der Hauptschneide 11 näher an der durch einen Punkt angedeuteten Mittelachse 13 liegt und ein der Mittelachse 13 abgewandtes Ende aufweist. An dieses schließt sich ein zweiter Teilabschnitt 17 der Hauptschneide 11 an, wobei im Übergangsbereich zwischen den beiden Teilabschnitten 15 und 17 ein gekrümmter Bereich B vorgesehen ist, dessen Krümmungsradius Ra dem entspricht, wie er in Figur 4 dargestellt ist. jede der Hauptschneiden 11 bildet im Übergangsbereich der Teilbereiche 15, 17 eine Spitze 21 aus.

Auch das in Figur 6 dargestellte Ausführungsbeispiel des Bohrwerkzeugs 1 weist eine Ausspitzung 23 auf, welche die Spanfläche für die von dem inneren Teilabschnitt 15 der Hauptschneide 11 abgetragenen Späne bildet. Diese gelangen, wie auch die von dem zweiten Teilabschnitt 17 abgetragenen Späne in den Spanraum 9. Auch hier ist vorgesehen, dass hier jeder der drei Hauptschneiden 11 jeweils ein eigener Spanraum 9 zugeordnet ist.

In den Figuren wurden Ausführungsbeispiele eines Bohrwerkzeugs 1 wiedergegeben, die zwei beziehungsweise drei Schneiden aufweisen. Selbstverständlich ist es möglich, Bohrwerkzeuge 1 mit mehr als drei Schneiden auszugestalten. Die hier dargestellten Ausführungsbeispiele des Bohrwerkezugs 1 haben sich in der Praxis besonders bewährt.

Eine Besonderheit des anhand der Figuren erläuterten Bohrwerkzeugs 1 ist die Tatsache, dass die Schneiden der mindestens zwei Hauptschneiden 11 in dem der Mittelachse 13 näheren ersten Teilabschnitt 15 eine Vormittestellung aufweisen, wie sie anhand von Figur 4 erläutert wurde. Diese Vormittestellung ist auch bei dem Ausführungsbeispiel gemäß Figur 6 vorgesehen. Die Schneiden der Hauptschneiden 11 weisen jeweils in dem ersten Teilabschnitt 15 eine Untermittelstellung auf.

Diese Ausgestaltung des Bohrwerkzeugs 1 führt dazu, dass sehr hohe Vorschubwerte erreicht werden können.

Weiterhin ist das Bohrwerkzeug 1 dadurch gekennzeichnet, dass die Untermittestellung der zweiten Teilabschnitte 17 0,5 % bis 2 % des Durchmessers D des Grundkörpers 3 ausmacht, während die Vormittestellung im ersten Teilabschnitt 15 der Hauptschneiden 11 6 % bis 15 % des Durchmessers D des Grundkörpers 3 ausmacht.

Darüber hinaus ist festzustellen, dass sich das Bohrwerkzeug 1 durch ein hohe Stabilität und Robustheit auszeichnet, sodass auch ein Mittenversatz von mehreren zehntel mm problemlos hingenommen werden kann, das heißt, das Bohrwerkzeug 1 wird auch dann nicht ohne Weiteres bei der Bearbeitung eines Werkstücks abgedrängt, wenn die Oberfläche des Werkstücks, mit der das Bohrwerkzeug 1 in Berührung tritt, so angeordnet ist, dass die Mittlachse 13 des Bohrwerkzeugs 1 nicht senkrecht auf dieser steht. Auch Unebenheiten der Oberfläche des Bohrwerkzeugs 1 werden aufgrund der Robustheit desselben leicht abgetragen, was dazu führt, dass das Bohrwerkzeug 1 nicht so leicht aus seiner Position abgedrängt wird.

Die hohe Stabilität und Robustheit wird dadurch erreicht, dass die Spanflächen des ersten Teilabschnitts 15 und die Spanflächen des zweiten Teilabschnitts 17 über einen Bereich B verbunden sind, der einen Radius Ra aufweist, der 10 % bis 25 % des Durchmessers D des Grundkörpers 3 ausmacht. Bei den Übergängen zwischen der Hohlschneide im Bereich ersten Teilabschnitts 15 und dem äußeren zweiten Teilabschnitt 17 wird also ein verhältnismäßig großer Radius Ra realisiert. Dieser Radius Ra ist in Figur 4 eingezeichnet, aber auch bei dem abgewandelten Ausführungsbeispiel nach Figur 5 und bei dem zweiten Ausführungsbeispiel gemäß Figur 6 vorgesehen. Dieser große Radius sorgt seinerseits dafür, dass das Bohrwerkzeug 1 sehr stabil ist.

Zu dieser Eigenschaft trägt auch die Tatsache bei, dass die Freiflächen 27 der Hauptschneiden 11 des Bohrwerkzeugs 1 einen Zwischenbereich aufweisen, in dem die beiden Teilbereiche 15, 17 ineinander übergehen und der mit einem Radius von Rf versehen ist, wobei Rf 10 % bis 25 % des Durchmessers D des Grundkörpers 3 ausmacht. Dies ist in Figur 2 dargestellt. Diese Ausgestaltung ist auch bei dem abgewandelten Ausführungsbeispiel nach Figur 5 und bei dem zweiten Ausführungsbeispiel gemäß Figur 6 vorgesehen.

Bei dem hier beschriebenen Bohrwerkzeug 1 wird die Ausspitzung 23 mit einem möglichst großen Grundradius Rg hergestellt, um die hohe Stabilität und Robustheit des Bohrwerkzeugs zu erreichen und Spannungsspitzen zu vermeiden. Dabei macht Rg 3 % bis 10 % des Durchmessers D des Grundkörpers 3 aus.

## Patentansprüche

1. Bohrwerkzeug (1) mit
- einem eine Mittelachse, einen Durchmesser (D) und eine Stirnseite (5) aufweisenden Grundkörper (3),
- mindestens zwei an der Stirnseite (5) vorgesehenen Hauptschneiden (11), die
- jeweils mehrere Teilabschnitte (15,17) aufweisen, von denen
- ein erster Teilabschnitt (15) der mindestens zwei Hauptschneiden (11) näher zur Mittelachse (13) angeordnet ist, und ein zweiter Teilabschnitt (17) sich an das der Mittelachse (13) abgewandte Ende des ersten Teilabschnitts (15) anschließt und einen größeren Abstand zur Mittelachse (13) aufweist, als der erste Teilabschnitt (15), wobei
- die ersten Teilabschnitte (15) der mindestens zwei Hauptschneiden (11) einen Spitzenwinkel si ≥ 180° und die zweiten Teilabschnitte (17) einen Spitzenwinkel Sa ≤ 180° miteinander einschließen, wodurch
- im Übergangsbereich zwischen dem ersten Teilabschnitt (15) und dem zweiten Teilabschnitt (17) eine in einem Abstand zur Mittelachse (13) angeordnete Spitze (21) ausgebildet wird, und
- wobei die Schneiden der mindestens zwei Hauptschneiden (11) im ersten Teilabschnitt (15) eine Untermittestellung aufweisen, wobei
- die Schneiden der mindestens zwei Hauptschneiden (11) im zweiten Teilabschnitt (17) eine Vormittestellung aufweisen,
**dadurch gekennzeichnet, dass**
- das Bohrwerkzeug (1) eine zentrale Querschneide (25) aufweist, welche die ersten Teilabschnitte (15) der Hauptschneiden (11) miteinander verbindet.

2. Bohrwerkzeug nach Anspruch 1, **dadurch gekennzeichnet, dass** die Untermittestellung der ersten Teilabschnitte (15) 0,5 % bis 2 % des Durchmessers (D) des Grundkörpers (3) ausmacht.

3. Bohrwerkzeug nach Anspruch 1 oder 2, **dadurch gekennzeichnet, dass** die Vormittestellung im zweiten Teilabschnitt (17) der mindestens zwei Hauptschneiden (11) 6 % bis 15 % des Durchmessers (D) des Grundkörpers (3) ausmacht.

4. Bohrwerkzeug nach einem der vorhergehenden Ansprüche, **dadurch gekennzeichnet, dass** im Bereich der Stirnseite (5) eine Ausspitzung (23) vorgesehen ist, die im Bereich der Mittelachse (13) mit einem Radius (Rg) geschliffen ist, wobei der Radius (Rg) zwischen 3 % und 10 % des Durchmessers (D) des Grundkörpers (3) beträgt.

5. Bohrwerkzeug nach einem der vorhergehenden Ansprüche, **dadurch gekennzeichnet, dass** die mindestens zwei Hauptschneiden (11) im Bereich des ersten Teilabschnitts (15) und des zweiten Teilabschnitts (17) Spanflächen aufweisen, wobei die Spanflächen des ersten Teilabschnitts (15) in die Spanflächen des zweiten Teilabschnitts (17) über einen Bereich B verbunden sind, der einen Radius (Ra) aufweist.

6. Bohrwerkzeug nach Anspruch 5, **dadurch gekennzeichnet, dass** der Radius (Ra) 10 % bis 25 % des Durchmessers (D) des Grundkörpers (3) ausmacht.

7. Bohrwerkzeug nach einem der vorhergehenden Ansprüche, **dadurch gekennzeichnet, dass** die Schneiden der mindestens zwei Hauptschneiden (11) im Bereich des ersten Teilabschnitts (15) und des zweiten Teilabschnitts (17) Freiflächen (27) aufweisen, wobei die Freiflächen (27) der beiden Teilabschnitte (15,17) einen die Spitze (21) bildenden Zwischenbereich aufweisen, der einen Radius von Rf aufweist.

8. Bohrwerkzeug nach Anspruch 7, **dadurch gekennzeichnet, dass** der Radius (Rf) 10 % bis 25 % des Durchmessers (D) des Grundkörpers (3) ausmacht.

9. Bohrwerkzeug nach einem der vorhergehenden Ansprüche, **gekennzeichnet durch** zwei Hauptschneiden (11).

10. Bohrwerkzeug nach einem der vorhergehenden Ansprüche, **gekennzeichnet durch** drei Schneiden.

11. Bohrwerkzeug nach einem der vorhergehenden Ansprüche, **gekennzeichnet durch** zwei Hauptschneiden (11) und drei Führungsfasen.

12. Bohrwerkzeug nach Anspruch 11, **dadurch gekennzeichnet, dass** die zwei Hauptschneiden (11) einen ersten Teilungswinkel (TA) und einen zweiten Teilungswinkel (TB) aufweisen, wobei die Teilungswinkel (TA,TB) verschieden sind und zwei der drei Führungsfasen auf dem Abschnitt mit dem größeren Teilungswinkel (TB) angeordnet sind.

## Claims

1. Drilling tool (1) with
- a base body (3) having a central axis, a diameter (D) and a front side (5),
- at least two main cutting edges (11) provided on the front side (5), which
- each have a plurality of partial sections (15, 17), of which
- a first partial section (15) of the at least two main cutting edges (11) is arranged closer to the central axis (13), and a second partial section (17) adjoins the end of the first partial section (15) facing away from the central axis (13) and is at a greater distance from the central axis (13) than the first partial section (15), wherein
- the first partial sections (15) of the at least two main cutting edges (11) include a point angle si ≥ 180° and the second partial sections (17) include a point angle Sa ≤ 180° with each other, whereby
- a point (21) is formed in the transition region between the first partial section (15) and the second partial section (17) at a distance from the central axis (13), and wherein
- the cutting edges of the at least two main cutting edges (11) having a below-center position in the first partial section (15), wherein
- the cutting edges of the at least two main cutting edges (11) having a ahead-ofcenter position in the second partial section (17),
**characterized in that**
- the drilling tool (1) has a central chisel edge (25) which connects the first partial sections (15) of the main cutting edges (11) to each other.

2. Drilling tool according to claim 1, **characterized in that** the below-center position of the first partial sections (15) makes up for 0.5% to 2% of the diameter (D) of the base body (3).

3. Drilling tool according to claim 1 or 2, **characterized in that** the ahead-ofcenter position in the second partial section (17) of the at least two main cutting edges (11) makes up 6% to 15% of the diameter (D) of the base body (3).

4. Drilling tool according to one of the preceding claims, **characterized in that** in the region of the front side (5) a recess (23) is provided which is ground with a radius (Rg) in the region of the central axis (13), the radius (Rg) being between 3% and 10% of the diameter (D) of the base body (3).

5. Drilling tool according to one of the preceding claims, **characterized in that** the at least two main cutting edges (11) have rake faces in the region of the first partial section (15) and of the second partial section (17), the rake faces of the first partial section (15) being connected into the rake faces of the second partial section (17) via a region B which has a radius (Ra).

6. Drilling tool according to claim 5, **characterized in that** the radius (Ra) makes up 10% to 25% of the diameter (D) of the base body (3).

7. Drilling tool according to one of the preceding claims, **characterized in that** the cutting edges of the at least two main cutting edges (11) in the region of the first partial section (15) and of the second partial section (17) have flank faces (27), the flank faces (27) of the two partial sections (15, 17) having an intermediate region which forms the point (21) and has a radius of Rf.

8. Drilling tool according to claim 7, **characterized in that** the radius (Rf) makes up 10% to 25% of the diameter (D) of the base body (3).

9. Drilling tool according to one of the preceding claims, **characterized by** two main cutting edges (11).

10. Drilling tool according to one of the preceding claims, **characterized by** three cutting edges.

11. Drilling tool according to one of the preceding claims, **characterized by** two main cutting edges (11) and three guide chamfers.

12. Drilling tool according to claim 11, **characterized in that** the two main cutting edges (11) have a first pitch angle (TA) and a second pitch angle (TB), wherein the pitch angles (TA,TB) are different and two of the three guide chamfers are arranged on the section with the larger pitch angle (TB).

## Revendications

1. Outil de perçage (1) avec
- un corps de base (3) présentant un axe central, un diamètre (D) et une face frontale (5),
- au moins deux arêtes de coupe principales (11) prévues sur la face frontale (5), qui
- présentent chacun plusieurs sections partielles (15, 17), dont
- une première section partielle (15) des au moins deux arêtes de coupe principales (11) est disposée plus près de l'axe central (13), et une deuxième section partielle (17) se raccorde à l'extrémité de la première section partielle (15) opposée à l'axe central (13) et présente une distance plus grande à l'axe central (13) que la première section partielle (15), dans laquelle
- les premières sections partielles (15) des au moins deux arêtes de coupe principales (11) forment un angle de pointe si ≥ 180° et les deuxièmes sections partielles (17) forment un angle de pointe Sa ≤ 180° l'une avec l'autre, moyennant quoi
- une pointe (21) disposée à une certaine distance de l'axe central (13) est formée dans la zone de transition entre la première section partielle (15) et la deuxième section partielle (17), et
- les arêtes de coupe des au moins deux arêtes de coupe principales (11) présentant une position de sous-engagement dans la première section partielle (15), dans laquelle
- les arêtes de coupe des au moins deux arêtes de coupe principales (11) présentent une position de pré-engagement dans la deuxième section partielle (17),
**caractérisé en ce que**
- l'outil de perçage (1) présente une arête transversale centrale (25) qui relie entre elles les premières sections partielles (15) des arêtes principales (11).

2. Outil de perçage selon la revendication 1, **caractérisé en ce que** la position de sous-engagement des premières sections partielles (15) représente 0,5 % à 2 % du diamètre (D) du corps de base (3).

3. Outil de perçage selon la revendication 1 ou 2, **caractérisé en ce que** la position de pré-engagement dans la deuxième section partielle (17) des au moins deux arêtes de coupe principales (11) représente 6 % à 15 % du diamètre (D) du corps de base (3).

4. Outil de perçage selon l'une des revendications précédentes, **caractérisé en ce qu'**il est prévu, dans la zone de la face frontale (5), un amincissement (23) qui est rectifiée avec un rayon (Rg) dans la zone de l'axe central (13), le rayon (Rg) étant compris entre 3 % et 10 % du diamètre (D) du corps de base (3).

5. Outil de perçage selon l'une des revendications précédentes, **caractérisé en ce que** les au moins deux arêtes de coupe principales (11) présentent des faces de coupe dans la zone de la première section partielle (15) et de la deuxième section partielle (17), les faces de coupe de la première section partielle (15) étant reliées dans les faces de coupe de la deuxième section partielle (17) par une zone B qui présente un rayon (Ra).

6. Outil de perçage selon la revendication 5, **caractérisé en ce que** le rayon (Ra) représente 10 % à 25 % du diamètre (D) du corps de base (3).

7. Outil de perçage selon l'une des revendications précédentes, **caractérisé en ce que** les arêtes de coupe des au moins deux arêtes de coupe principales (11) présentent des surfaces de dépouille (27) dans la zone de la première section partielle (15) et de la deuxième section partielle (17), les surfaces de dépouille (27) des deux sections partielles (15, 17) présentant une zone intermédiaire formant la pointe (21), qui présente un rayon de Rf.

8. Outil de perçage selon la revendication 7, **caractérisé en ce que** le rayon (Rf) représente 10 % à 25 % du diamètre (D) du corps de base (3).

9. Outil de perçage selon l'une des revendications précédentes, **caractérisé par** deux arêtes de coupe principales (11).

10. Outil de perçage selon l'une des revendications précédentes, **caractérisé par** trois arêtes de coupe.

11. Outil de perçage selon l'une des revendications précédentes, **caractérisé par** deux arêtes de coupe principales (11) et trois chanfreins de guidage.

12. Outil de perçage selon la revendication 11, **caractérisé en ce que** les deux arêtes de coupe principales (11) présentent un premier angle de pas (TA) et un deuxième angle de pas (TB), les angles de pas (TA, TB) étant différents et deux des trois chanfreins de guidage étant disposés sur la section présentant le plus grand angle de pas (TB).
